# FASCICULE DE BREVET EUROPEEN

(11) **EP 4 439 367 B1**
(45) Date de publication et mention de la délivrance du brevet: **03.09.2025**
(21) Numéro de dépôt: 24164625.6
(22) Date de dépôt: 19.03.2024
(51) Int. Cl.: G06F 12/14, G06F 21/34, G06F 21/72, G06F 21/74, H04L 9/06, H04L 9/08

(54) **CIRCUIT ET PROCÉDÉ D'INTERFACE AVEC DES CIRCUITS PÉRIPHÉRIQUES**
SCHALTUNG UND VERFAHREN ZUR SCHNITTSTELLENBILDUNG MIT PERIPHERIESCHALTUNGEN
CIRCUIT AND METHOD FOR INTERFACING WITH PERIPHERAL CIRCUITS

(30) Priorité: 31.03.2023 FR 2303154
(43) Date de publication de la demande: 02.10.2024
(73) Titulaire: STMicroelectronics International N.V., 1228 Plan-les-Ouates, Geneva (CH)
(72) Inventeur: ANQUET, Nicolas, 38000 GRENOBLE (FR); PELISSIER, Gilles, 38800 CHAMPAGNIER (FR)
(74) Mandataire: Cabinet Beaumont

(56) Documents cités:
- EP-A1- 1 870 814
- US-A1- 2012 008 768
- US-B1- 6 708 273

## Description

### Domaine technique

La présente description concerne de façon générale les circuits et les procédés pour assurer une interface avec des circuits périphériques.

### Technique antérieure

Certains processeurs génériques compris dans des dispositifs électroniques sont amenés à interagir avec des circuits périphériques. Dans certains cas, ces circuits périphériques peuvent assurer des fonctions liées à la sécurité, comme des opérations cryptographiques, telles que des opérations de chiffrement, de génération de signature et/ou valeur d'hachage, etc. Le document US6708273 B1 divulgue un processeur de signal numérique avec des fonctions de sécurité intégrées sur un seul circuit intégré dans lequel un coprocesseur cryptographique comprend un circuit de cryptage, un circuit générateur de nombres aléatoires, un circuit accélérateur de clé publique matérielle, une mémoire morte sécurisée (ROM) du noyau, une mémoire vive (RAM) du noyau protégée, des registres de cache de clés volatiles, le circuit de hachage et le circuit de contrôle du mode noyau.

Un problème avec des interactions entre le processeur générique et des circuits périphériques est la demande importante subie par le processeur générique en termes de traitement des communications avec les circuits périphériques.

De plus, le processeur générique peut être amené à manipuler des secrets du dispositif, tels que par exemple des clefs de chiffrements. Ces secrets sont, par exemple, manipulés par le processeur générique lors de l'exécution des opérations cryptographiques. Cependant, il est souhaitable que des logiciels, exécutés par le processeur générique, n'ait pas accès à ces secrets.

Il existe donc un besoin d'une solution pour améliorer les interactions entre un processeur générique et des circuits périphériques.

### Résumé de l'invention

La présente invention est définie par les revendications indépendantes jointes auxquelles il convient de se référer. Des caractéristiques avantageuses sont exposées dans les revendications dépendantes.

Un mode de réalisation prévoit un circuit d'interface relié à au moins un premier et un deuxième circuits périphériques, et comprenant un registre stockant un paramètre d'état, le circuit d'interface étant configuré pour :
- recevoir une demande d'accès pour écriture ou lecture, en provenance d'un processeur et vers une adresse de destination dans le premier circuit périphérique ; et
- générer une opération d'écriture et/ou de lecture vers le premier et/ou le deuxième circuit périphérique, l'opération et sa destination étant sélectionnées en fonction de la valeur d'état et de l'adresse de destination.

Selon un mode de réalisation, lorsque la demande d'accès est une demande d'accès pour écriture d'une donnée, le circuit d'interface est en outre configuré pour sélectionner l'opération et/ou sa destination en fonction en outre de la valeur de la donnée.

Selon un mode de réalisation, lorsque la demande d'accès est une demande d'accès pour écriture d'une première valeur de donnée ou d'une deuxième valeur de donnée, différente de la première valeur de donnée, dans le premier circuit et lorsque le paramètre d'état est programmé à une première valeur d'état, l'opération générée comprend l'écriture d'une autre valeur de donnée, générée par le deuxième circuit périphérique, à l'adresse de destination dans le premier circuit périphérique.

Selon un mode de réalisation, lorsque le paramètre d'état est programmé à une deuxième valeur d'état, différente de la première valeur d'état, l'opération comprend la lecture dans le premier circuit périphérique d'une valeur de donnée stockée à l'adresse de destination et l'écriture de la valeur de donnée dans le deuxième circuit périphérique.

Selon un mode de réalisation, le circuit ci-dessus est en outre configuré pour, lorsque le paramètre d'état est programmé à une valeur d'initialisation, autoriser l'accès, par le processeur, vers chacun des au moins deux circuits périphériques.

Selon un mode de réalisation, lorsque la demande d'accès est une demande d'accès pour écriture d'une valeur de donnée interdite, l'opération générée comprend la programmation de la valeur du paramètre d'état à la valeur d'initialisation et la suppression du contenu d'au moins un des circuits périphériques.

Selon un mode de réalisation, l'opération générée comprend en outre la lecture et/ou l'écriture dans un troisième circuit périphérique relié au circuit d'interface.

Selon un mode de réalisation, le circuit ci-dessus est configuré en outre pour, suite à la demande d'accès pour lecture ou écriture en provenance du processeur, retourner une valeur par défaut au processeur.

Un mode de réalisation prévoit un dispositif électronique comprenant :
- le circuit d'interface ci-dessus ; et
- les au moins deux circuits périphériques reliés au circuit d'interface ; et
- le processeur relié au circuit d'interface et configuré pour transmettre une demande d'accès pour lecture ou écriture vers une adresse de destination dans l'un parmi les au moins deux circuits périphériques.

Selon un mode de réalisation, les au moins deux circuits périphériques comprennent un premier circuit cryptographique et un générateur de nombres, et le circuit d'interface est configuré pour, lorsque le paramètre d'état est programmé à une première valeur d'état, intercepter une demande d'accès pour écriture d'une clef de chiffrement en provenance du processeur et vers une adresse de destination dans le premier circuit cryptographique et commander l'écriture d'une autre valeur, générée par le générateur de nombres, à l'adresse de destination dans le premier circuit cryptographique.

Selon un mode de réalisation, les au moins deux circuits comprennent en outre un deuxième circuit cryptographique, et le circuit d'interface est configuré pour, lorsque le paramètre d'état est programmé à une deuxième valeur d'état différente de la première valeur d'état, intercepter une demande d'accès pour écriture et/ou de lecture en provenance du processeur et vers une adresse de destination dans le premier circuit cryptographique et commander l'écriture d'une valeur de donnée, préalablement stockée à l'adresse de destination dans le premier circuit cryptographique, dans le deuxième circuit cryptographique.

Selon un mode de réalisation, le circuit ci-dessus comprend en outre un circuit de réinitialisation d'horloge configuré pour activer et/ou désactiver les au moins deux circuits périphériques et le circuit d'interface est configuré pour commander le circuit de réinitialisation d'horloge.

Un mode de réalisation prévoit un procédé comprenant :
- la réception, par un circuit d'interface, d'une demande d'accès pour écriture ou lecture, en provenance d'un processeur et vers une adresse de destination dans un premier circuit périphérique relié au circuit d'interface ;
- la génération, par le circuit d'interface, d'une opération d'écriture et/ou de lecture vers le premier et/ou un deuxième circuit périphérique relié au circuit d'interface, l'opération et sa destination étant sélectionnées en fonction de la valeur d'un paramètre d'état, stocké dans un registre du circuit d'interface, et de l'adresse de destination.

Selon un mode de réalisation, lorsque la demande d'accès est une demande d'accès pour écriture d'une donnée, l'opération générée et/ou sa destination sont sélectionnées en fonction en outre de la valeur de la donnée.

Selon un mode de réalisation, le procédé ci-dessus comprend en outre la fourniture, par le circuit d'interface et vers le processeur, d'une valeur par défaut en réponse à la demande d'accès pour lecture ou écriture.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par blocs d'un dispositif électronique comprenant un circuit de couplage et de chainage selon un mode de réalisation de la présente description ;
la figure 2 illustre plus en détail un circuit du dispositif électronique selon un mode de réalisation de la présente description ;
la figure 3 est un schéma par blocs illustrant un exemple d'une opération mise en œuvre par le circuit de couplage et de chainage ;
la figure 4A est un schéma par blocs illustrant un exemple d'une opération mise en œuvre par le circuit de couplage et de chainage ;
la figure 4B est un schéma par blocs illustrant un exemple d'une autre opération mise en œuvre par le circuit de couplage et de chainage ;
la figure 5A est un schéma par blocs illustrant un exemple d'une autre opération mise en œuvre par le circuit de couplage et de chainage ;
la figure 5B est un schéma par blocs illustrant un exemple d'encore une autre opération mise en œuvre par le circuit de couplage et de chainage ;
la figure 6 est un organigramme illustrant des étapes réalisées lors de différents modes de fonctionnement du circuit de couplage et de chainage ;
la figure 7 est un tableau présentant des exemples de différentes opérations effectuées par le circuit de couplage et de chainage en fonction d'une valeur d'état ; et
la figure 8 est un schéma par blocs illustrant un autre mode de réalisation d'un dispositif électronique.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les algorithmes cryptographiques, tels que des algorithmes de type AES (de l'anglais « Asymetric Encryption Standard »), ainsi que les algorithmes de dérivation de clef, ne sont pas décrit en détail et sont connus par la personne du métier.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

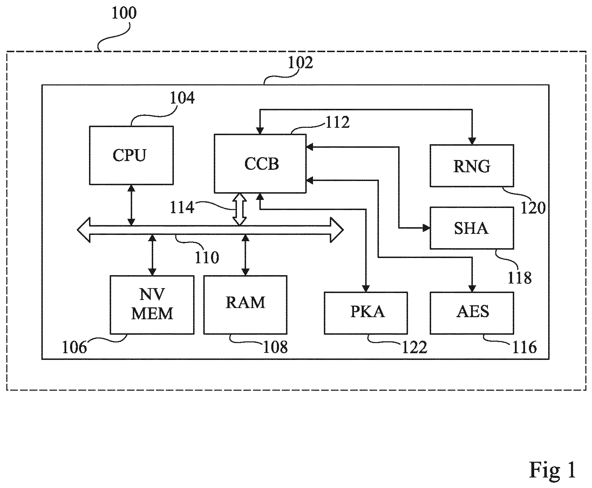

La figure 1 est un schéma par blocs d'un dispositif électronique 100 comprenant un circuit intégré 102 selon un mode de réalisation de la présente description.

Le dispositif électronique 100 est par exemple un dispositif électronique mobile, tel qu'un téléphone mobile, ou une carte électronique telle qu'une carte à microcircuits.

Le circuit 102 comprend par exemple un processeur 104 (CPU) relié à une mémoire non volatile 106 (NV MEM) et à une mémoire volatile 108 (RAM) par l'intermédiaire d'un bus système 110. A titre d'exemple, la mémoire 106 est une mémoire de type Flash, et la mémoire 108 est une mémoire de type RAM (de l'anglais "Random Access Memory").

Selon un mode de réalisation, le circuit 102 comprend en outre un circuit d'interface 112 (CCB - de l'anglais « Coupling and Chaining Bridge ») relié au bus 110 par l'intermédiaire d'un bus 114. Le terme « couplage » réfère à une ou plusieurs transactions effectuées en parallèle par deux circuits périphériques alors que le terme « chainage » réfère à une ou plusieurs transactions effectuées en série par deux circuits périphériques. En d'autres termes, dans une opération de chainage, les deux circuits périphériques impliqués sont occupés l'un après l'autre. Le circuit d'interface est par exemple configuré pour assurer une liaison entre le bus 114 et des circuits périphériques. Le circuit d'interface 112 sera également appelé ici « circuit de couplage et de chainage », car il est capable de réaliser des fonctions de couplage et/ou de chainage en relation avec les circuits périphériques. Le bus 114 est par exemple un bus de type AHB (de l'anglais « Advanced High-performance Bus »). Dans d'autres exemples, le bus 114 est un bus de type APB (de l'anglais « Advanced Peripheral Bus ») ou AXI (de l'anglais « Advanced External Interface »).

Le circuit 102 comprend par exemple des circuits périphériques 116, 118, 120 et/ou 122.

Le circuit 116 (AES) est par exemple un circuit cryptographique. Le circuit cryptographique 116 est par exemple configuré pour chiffrer et/ou déchiffrer des données selon un algorithme de chiffrement symétrique, tel que par exemple un algorithme de type AES (de l'anglais « Advanced Encryption Standard »).

Le circuit 118 (SHA) est par exemple un autre circuit cryptographique. A titre d'exemple, le circuit 118 est un circuit configuré pour effectuer des opérations de hachage, par exemple selon un algorithme de type SHA (de l'anglais « Secure Digest Algorithm »). A titre d'exemple, le circuit cryptographique 118 est en outre configuré pour effectuer des opérations cryptographiques, telles que par exemple, des générations de clefs symétriques et/ou des fonctions de dérivation de clefs et/ou des calculs de clefs partagées, par exemple utilisées pour du chiffrement et déchiffrement ECDH (de l'anglais « Elliptic Curve Diffie Hellman »). Dans un autre exemple, le circuit cryptographique 118 est configuré pour générer des signatures de type SHA1, SHA2 et/ou SHA3 ou des codes d'authentification de message de hachage à clef (HMAC - l'anglais « hashed MAC »).

Le circuit 120 (RNG) est, par exemple, un générateur de nombres purement aléatoire (TRNG - de l'anglais « True Random Number Generation ») utilisant une source physique d'aléatoire basée, par exemple, sur des propriétés intrinsèques du matériau sur lequel il est implanté. Dans un autre exemple, le générateur de nombres est un générateur de nombres pseudo-aléatoires, par exemple un générateur congruentiel linéaire.

Dans un autre exemple, le générateur de nombres 120 est implémenté de manière logicielle, par exemple un logiciel stocké et exécuté dans le circuit de couplage et de chainage 112 dans le cas où celui-ci comprend un processeur et une mémoire adaptés. Dans cet exemple, le circuit 102 est configuré pour que le processeur 104 n'ait pas accès aux valeurs générées par le générateur de nombres 120 pour un circuit périphérique parmi les circuits 116, 118 ou 122.

Le circuit 122 (PKA) est par exemple un accélérateur de clefs. A titre d'exemple, le circuit 122 est configuré pour effectuer des pré-calculs sur une clef privée ou publique avant qu'elle ne soit par exemple traitée par le circuit cryptographique 116 ou par le circuit cryptographique 118.

Le processeur 104 est par exemple un processeur générique et non-sécurisé. Ainsi, lorsque des données sensibles du circuit 102, telles que des clefs cryptographiques stockées dans la mémoire non volatile 106, sont manipulés par le processeur 104, leur intégrité n'est pas garantie.

Selon un mode de réalisation, les circuits cryptographiques 116 et 118 et le circuit 122 sont chacun reliés, par l'intermédiaire d'un bus dédié, au circuit de couplage et de chainage 112. Dans l'exemple où le générateur de nombre 120 est un circuit matériel, celui-ci est également relié, par exemple, au circuit de couplage et de chainage 112 par l'intermédiaire d'un bus dédié. Le circuit de couplage et de chainage 112 est configuré pour effectuer des opérations de chainage sur des données échangées entre les circuits 116 à 122.

A titre d'exemple, d'autres circuits périphériques, par exemple d'autres circuits cryptographiques, sont aussi reliés au circuit de couplage et de chainage 112 et dans d'autres modes de réalisation, un ou plusieurs des circuits 116, 118, 120 et/ou 122 pourrait être omit.

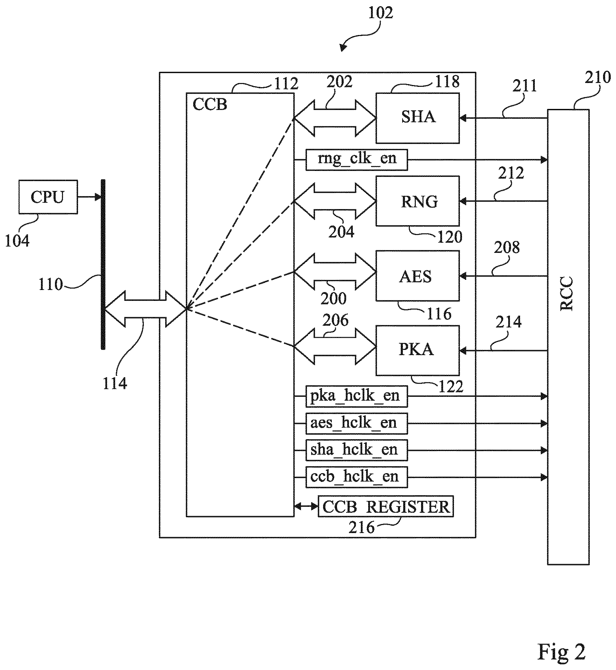

La figure 2 illustre plus en détail le circuit 102 selon un mode de réalisation de la présente description.

Les circuits 116, 118, 120 et 122 sont, par exemple, chacun respectivement relié au circuit de couplage et de chainage 112 par l'intermédiaire d'un bus 200, 202, 204 et 206. A titre d'exemple, les bus 110, 114 et 200 à 206 sont des bus de type AHB. Dans d'autres exemples, les bus 110, 114 et 200 à 206 sont des bus de type APB ou AXI. Encore dans un autre exemple, les bus 110, 114 et 200 à 206 sont des bus propriétaires.

A titre d'exemple, le circuit de couplage et de chainage 112 est relié à d'autres circuits périphériques (non illustrés) par l'intermédiaire de bus dédiés. Par exemple, le circuit de couplage et de chainage 112 est relié à un circuit de contrôle de redondance cyclique configuré pour générer des codes de vérification d'erreurs sur la base de valeurs de données.

A titre d'exemple, le circuit 102 comprend en outre un circuit de réinitialisation et de commande d'horloge 210 (RCC) (en anglais « Reset and Clock Control Circuit »). A titre d'exemple, le circuit 210 est configuré pour commander le cadencement du circuit 116, respectivement 118, 120 et 122, par l'intermédiaire de bus d'horloge 208, respectivement 211, 212 et 214.

A titre d'exemple, le circuit de couplage et de chainage 112 est en outre configuré pour commander l'activation d'un ou de plusieurs circuits périphériques 116, 118 et/ou 122 par l'intermédiaire du circuit de réinitialisation d'horloge 210. A titre d'exemple, le circuit de couplage et de chainage 112 transmet un ou plusieurs signaux d'activation aes_hclk_en, sha_hclk_en, pka_hclk_en, ccb_hclk_en et/ou rng_hclk_en au circuit de réinitialisation d'horloge 210 afin de forcer le circuit de réinitialisation d'horloge 210 à cadencer les circuits 116, 118, 122, 112 et/ou 120. Lorsque le circuit de réinitialisation d'horloge 210 est forcé à cadencer les circuits 116, 118 et/ou 122, il n'est plus possible de désactiver le cadencement de manière logicielle, par exemple par programmation dans des registres du circuit 210. Par le moyen des signaux d'activation aes_hclk_en, sha_hclk_en et/ou pka_hclk_en, le circuit de couplage et de chainage 112 est donc capable d'activer l'un ou plusieurs des circuits 116, 118, 120 et 122.

Le circuit de couplage et de chainage 112 est configuré pour effectuer des opérations de lecture et/ou d'écriture entre les circuits périphériques 116, 118, 120 et/ou 122 suite à la réception d'une demande d'accès, vers l'un des circuits périphériques 116, 118, 120 et/ou 122 et en provenance du processeur 104.

A titre d'exemple, le circuit de couplage et de chainage 112 comprend un registre 216 (CCB REGISTER) configuré pour stocker un paramètre d'état. A titre d'exemple, la valeur d'état conditionne le comportement du circuit de couplage et de chainage. A titre d'exemple, pour deux valeurs du paramètre d'état différentes, les circuits périphériques impliqués, et/ou le type d'opérations effectuées, diffèrent. La valeur d'état est par exemple programmée par le circuit de couplage et de chainage 112, et en particulier par une machine d'état réalisée par le circuit de couplage et de chainage 112. La valeur du paramètre d'état écrite dans le registre 216 impose un type d'opération, par exemple une opération de lecture et/ou d'écriture, dans le circuit 122. La valeur du paramètre d'état impose, par exemple en outre, une suite d'états dans la machine d'états, chaque état de la machine d'états étant associé à une ou plusieurs opérations de chainage et/ou de couplage entre au moins deux circuits périphériques. Plus particulièrement, une valeur de configuration est par exemple stockée dans un registre de la machine d'état. Cette valeur correspond par exemple à une configuration du circuit de couplage et de chainage 112, et pour chaque valeur de configuration, la valeur du paramètre d'état indique au circuit de couplage et de chainage 112 une opération à effectuer. Ainsi, en fonction de la valeur de configuration, une même valeur du paramètre d'état signifie par exemple deux transactions différentes. Ainsi, les séquences possibles des valeurs prises par le paramètre d'état différent en fonction de la valeur du paramètre de configuration.

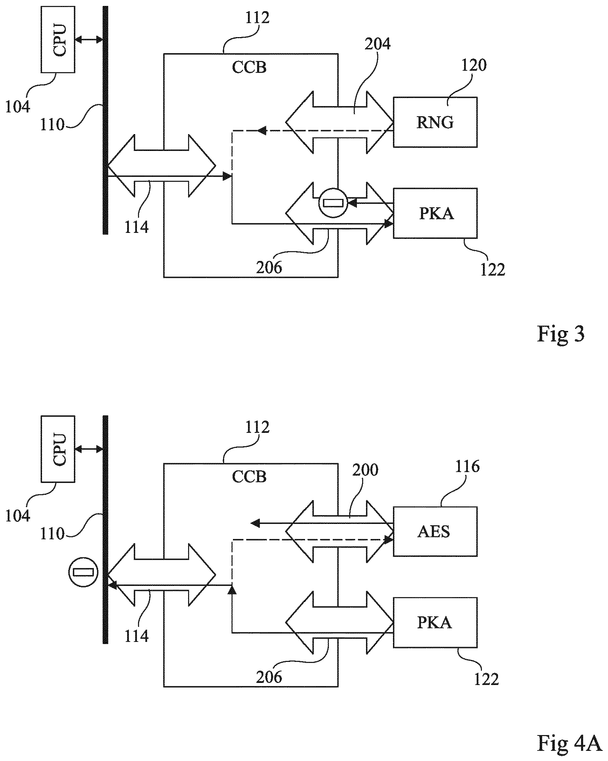

La figure 3 est un schéma par blocs illustrant un exemple d'opération mis en œuvre par le circuit de couplage et de chainage 112, entre les circuits 120 et 122.

A titre d'exemple, la figure 3 illustre une opération de chainage, mise en œuvre par le circuit de couplage et de chainage 112. Cette opération est par exemple réalisée pour une première valeur de configuration de la machine d'états. En particulier, durant la réalisation de l'opération décrite, la valeur du paramètre d'état évolue. A titre d'exemple, la valeur du paramètre d'état est incrémentée suite à chaque transaction entre deux circuits.

Dans l'exemple illustré par la figure 3, le processeur 104 transmet une donnée d'écriture d'une clef privée, ou plus généralement une valeur de donnée, vers une adresse de destination dans le circuit 122.

Selon un mode de réalisation, le circuit de couplage et de chainage 112 est configuré pour intercepter la valeur de donnée, transmise par l'intermédiaire du bus 114. Le circuit de couplage et de chainage 112 est en outre configuré pour, à la réception de la demande d'accès pour écriture, commander la génération d'une valeur par le générateur de nombres 120. A titre d'exemple, avant, ou directement suite à, la transmission de la valeur de donnée à écrire par le processeur, il est vérifié qu'une valeur aléatoire est disponible dans le circuit générateur de nombres 120. A titre d'exemple, si aucune donnée n'est disponible dans le circuit générateur de nombres 120, un signal d'erreur est généré. A titre d'exemple, suite à la génération du signal d'erreur, toutes les données stockées dans les circuits 116, 118 et 122 sont effacées. De plus, à titre d'exemple, suite à la génération du signal d'erreur, la demande d'accès pour écriture est abandonnée. Dans un autre exemple, pour une ou plusieurs valeurs de configuration données, le processeur 104 est autorisé à écrire une valeur, connue par le processeur 104, dans le circuit 122.

Le circuit de couplage et de chainage 112 est alors configuré pour générer une nouvelle demande d'écriture vers le circuit 122 à réception d'une demande d'accès pour écriture, dans une mémoire volatile du circuit 122, venant du processeur 104. L'écriture dans le circuit 122 commandée par le circuit de couplage et de chainage 122 est par exemple réalisée à l'adresse de destination indiquée dans la demande d'accès pour écriture par le processeur 104.

A titre d'exemple, quelque soit la valeur de la clef, ou plus généralement de la donnée, transmise par le processeur 104, c'est une valeur générée par le générateur de nombres 120 qui est écrite à l'adresse de destination voulue dans le circuit 122.

Selon un mode de réalisation, le circuit de couplage et de chainage 112 est en outre configuré pour interdire la lecture dans le circuit 122 au processeur 104. A titre d'exemple, le circuit de couplage et de chainage 112 est configuré pour retourner au processeur 104 une valeur par défaut en réponse à une demande d'accès, venant du processeur 104, pour lecture et/ou écriture dans le circuit 122. Ainsi, la valeur stockée dans une mémoire volatile du circuit 122, à la place de la valeur de donnée transmise par le processeur 104, est inaccessible par le processeur 104.

La figure 4A est un schéma par blocs illustrant un exemple d'opération mis en œuvre par le circuit de couplage et de chainage 112 entre les circuits 122 et 116. Plus particulièrement, la figure 4A illustre une opération de chainage du circuit 122 vers le circuit cryptographique 116.

A titre d'exemple, la figure 4A illustre une opération de chainage, mise en œuvre par le circuit de couplage et de chainage 112. Cette opération est par exemple réalisée pour une deuxième valeur de configuration de la machine d'états. En particulier, durant la réalisation de l'opération décrite, la valeur du paramètre d'état évolue. A titre d'exemple, la valeur du paramètre d'état est incrémentée suite à chaque transaction entre deux circuits.

Dans l'exemple illustré par la figure 4A, le processeur 104 souhaite accéder au circuit 122. Le processeur 104 transmet par exemple une demande d'accès pour écriture d'une donnée stockée à une adresse de destination dans le circuit 122.

Selon un mode de réalisation, le circuit de couplage et de chainage 112 est configuré pour fournir une valeur par défaut au processeur 104 en réponse à une demande d'accès pour écriture, venant du processeur 104. A titre d'exemple, la valeur par défaut consiste à indiquer au processeur que l'écriture a été réalisée, par exemple en retournant une valeur d'écriture terminée (ou « write done » en anglais). Le circuit de couplage et de chainage 112 est en outre configuré pour, en réponse à la demande d'accès à l'adresse de destination dans le circuit 122, générer une demande d'accès pour écriture de la valeur de donnée stockée à l'adresse de destination dans le circuit 122, vers le circuit cryptographique 116. Le circuit de couplage et de chainage 112 est en outre par exemple configuré pour transformer la demande d'écriture du processeur 104 en demande de lecture à l'adresse donnée par le processeur 104 dans la mémoire volatile du circuit 122 en utilisant un bus dédié. La valeur récupérée dans la mémoire volatile du circuit 122 est ensuite écrite, par le circuit de couplage et de chainage 112, dans le circuit 116 à une adresse fixe qui correspond, par exemple, à l'entrée d'une mémoire de type FIFO (de l'anglais « First Input First Output »). Dans le cas où un problème est détecté, tel qu'une écriture dans un mauvais format, par exemple une écriture de 1 byte ou 2 bytes au lieu d'une écriture de 4 bytes, une erreur est retournée au processeur 104 en réponse à la demande d'écriture.

Le circuit cryptographique 116 est alors configuré pour chiffrer la valeur de donnée, par exemple selon un algorithme de chiffrement AES. A titre d'exemple, la valeur chiffrée est accessible par le processeur 104.

La valeur de la donnée transmise par le processeur 104 est, par exemple, un paramètre supplémentaire à l'opération effectuée. A titre d'exemple, la valeur de la donnée indique une adresse dans le circuit 116 à laquelle la donnée, stockée à l'adresse de destination dans le circuit 122, est à écrire.

Dans un autre exemple, le circuit de couplage et de chainage 112 est configuré pour effectuer l'opération décrite en relation avec la figure 4A uniquement lorsque la valeur de donnée transmise par le processeur 104 est égale à une valeur définie en amont, telle que par exemple une valeur dite magique. A titre d'exemple, à réception d'une demande d'accès pour écriture d'une valeur de donnée, le circuit de couplage et de chainage 112 est configuré pour comparer la valeur de donnée avec une valeur par exemple stockée dans un registre du circuit de couplage et de chainage 112. A titre d'exemple, la comparaison est effectuée par une machine à état. A titre d'exemple, dans le cas où les deux valeurs diffèrent, le circuit de couplage et de chainage 112 est configuré pour, par exemple effectuer une opération telle que l'écriture de 0 dans la mémoire volatile du circuit 122. L'écriture de 0, par le processeur 104, entraine, par exemple, l'arrêt des opérations de chainages, indique au circuit 122 la fin du transfert et permet le passage à la valeur de configuration suivante pour la machine d'état.

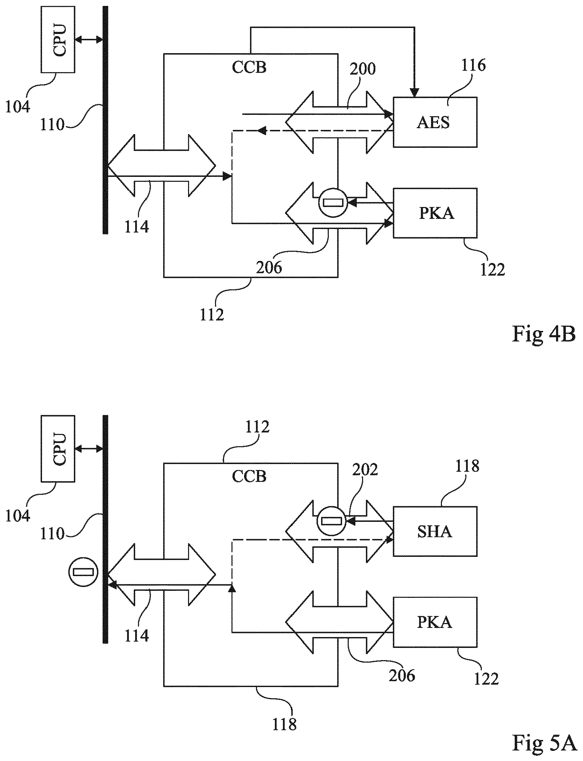

La figure 4B est un schéma par blocs illustrant un exemple d'opération mis en œuvre par le circuit de couplage et de chainage 112 entre les circuits 122 et 116. Plus particulièrement, la figure 4B illustre une opération de chainage du circuit 116 vers le circuit cryptographique 122. Cette opération est par exemple réalisée pour une troisième valeur de configuration de la machine d'états. En particulier, durant la réalisation de l'opération décrite, la valeur du paramètre d'état évolue. A titre d'exemple, la valeur du paramètre d'état est incrémentée suite à chaque transaction entre deux circuits.

Le processeur 104 transmet par exemple une demande d'accès pour écriture vers une adresse de destination dans le circuit 122. A titre d'exemple, l'opération de chainage est effectuée lorsque la valeur de donnée transmise par le processeur 104 est égale à une valeur définie en amont, par exemple une valeur magique, par exemple égale à 0xCCB. Lorsque la valeur transmise par le processeur 104 est différente de la valeur magique, le circuit de couplage et de chainage 112 est configuré pour permettre l'écriture de 0 dans la mémoire volatile du circuit 122 et pour indiquer la fin de l'écriture dans la mémoire volatile du circuit 122 et le passage à la valeur de configuration suivante pour la machine d'états. La fin de l'écriture dans la mémoire volatile du circuit 122 entraîne donc la reprogrammation de la valeur de configuration. A titre d'exemple, l'opération de comparaison entre la valeur magique et la donnée transmise par le processeur 104 est réalisée pour une valeur du paramètre d'état donnée.

Dans un autre exemple, le circuit de couplage et de chainage 112 est par exemple configuré pour, par exemple, commander le déchiffrement de la valeur stockée à l'adresse de destination dans le circuit 116, et son écriture dans le circuit 122. A titre d'exemple, la valeur de la donnée à écrire fournie par le processeur 104 indique une adresse dans le circuit 122 à laquelle la valeur déchiffrée est à écrire.

Dans un exemple, la valeur de la donnée à écrire transmise par le processeur 104 permet au circuit de couplage et de chainage 112 de déterminer entre quels circuits périphériques l'opération est à réaliser.

La figure 5A est un schéma par blocs illustrant un exemple d'une opération mise en œuvre par le circuit de couplage et de chainage 112. Plus particulièrement, l'opération illustrée en relation avec la figure 5A s'effectue entre le circuit 122 et le circuit cryptographique 118. Cette opération est par exemple réalisée pour une quatrième valeur de configuration de la machine d'états. En particulier, durant la réalisation de l'opération décrite, la valeur du paramètre d'état évolue. A titre d'exemple, la valeur du paramètre d'état est incrémentée suite à chaque transaction entre deux circuits.

A réception d'une demande d'accès pour écriture d'une valeur de donnée, vers une adresse de destination dans le circuit 122, le circuit de couplage et de chainage 112 est par exemple configuré pour commander l'écriture de la donnée déjà stockée à l'adresse de destination dans le circuit 122 vers le circuit 118.

Dans un exemple, la valeur de la donnée transmise par le processeur 104 correspond à une adresse dans le circuit 118 à laquelle la donnée est à écrire. Dans un autre exemple, la valeur de la donnée à écrire n'apporte aucune information et une unique adresse dans le circuit 118 est accessible pour écriture.

Dans un autre exemple, la valeur de donnée transmise par le processeur 104 indique par exemple entre quels dispositifs périphériques l'opération est à effectuer.

Dans l'exemple illustrée par la figure 5A, le circuit 118 est configuré pour effectuer des opérations cryptographiques de signatures comme le SHA2 ou des opérations cryptographiques de HMAC, telles que par exemple des opérations de dérivation de clefs. Le circuit de couplage et de chainage 112 est en outre configuré pour, en réponse à la demande d'accès transmise par le processeur 104, transmettre une valeur par défaut au processeur 104. Le processeur 104 n'a alors pas accès aux valeurs stockées dans les circuits 118 et 122.

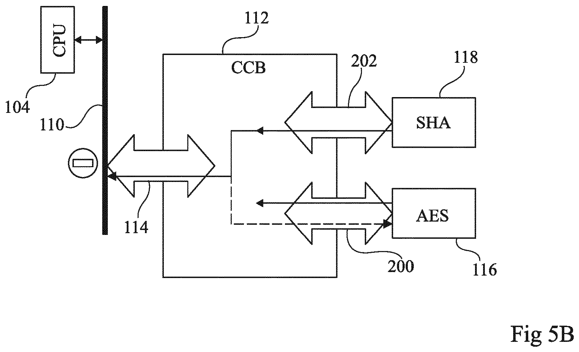

La figure 5B est un schéma par blocs illustrant un exemple d'une opération entre les circuits cryptographiques 116 et 118, mise en œuvre par le circuit de couplage et de chainage 112. Cette opération est par exemple réalisée pour une cinquième valeur de configuration de la machine d'états. En particulier, durant la réalisation de l'opération décrite, la valeur du paramètre d'état évolue. A titre d'exemple, la valeur du paramètre d'état est incrémentée suite à chaque transaction entre deux circuits.

La programmation de la valeur de configuration à une valeur différente de celle décrite en relation avec la figure 4A permet par exemple à la machine d'état d'être placée dans un état permettant des opérations de chainage du circuit 118 vers le circuit 116 et non plus du circuit 122 vers le circuit 118.

Dans un autre exemple, l'opération décrite en relation avec la figure 5B est réalisée lorsque le paramètre d'état est programmé vers la deuxième valeur d'état. A titre d'exemple, dans ce cas, c'est la valeur de la donnée transmise par le processeur 104 qui permet par exemple au circuit de couplage et de chainage 112 de distinguer si l'opération à effectuer est celle décrite par la figure 4A ou celle décrite en relation avec la figure 5B. En d'autres termes, la valeur de la donnée à écrire détermine si l'opération à effectuer implique le circuit 122 ou le circuit 118.

A titre d'exemple le processeur 104 envoie une demande d'accès pour écriture vers une adresse de destination dans le circuit cryptographique 118. A titre d'exemple, le processeur 104 demande l'accès au résultat précédemment généré par le circuit 118 suite à l'opération décrite en relation avec la figure 5A.

Dans l'exemple décrit en relation avec la figure 5B, le circuit de couplage et de chainage 112 est par exemple configuré pour intercepter la demande d'accès pour écriture et pour commander l'écriture de la donnée, déjà stockée à l'adresse de destination dans le circuit 118, vers le circuit 116. A titre d'exemple, la valeur de donnée transmise par le processeur 104 correspond à une adresse dans le circuit 116 à laquelle la donnée du circuit 118 est à écrire.

A titre d'exemple, le circuit 116 est configuré pour chiffrer la donnée. Le processeur 104 a par exemple alors accès à la valeur de donnée chiffrée par le circuit 116.

Selon un mode de réalisation, le circuit de couplage et de chainage 112 est configuré pour retourner une valeur par défaut en réponse à la demande d'accès venant du processeur 104.

Bien que les opérations décrites en relation avec les figures 3, 4A, 4B, 5A et 5B soient effectuées suite à une demande d'accès pour écriture venant du processeur 104, il est tout à fait possible de configurer le circuit de couplage et de chainage 112 de sorte que ces opérations soient effectuées suite à des demandes d'accès pour lecture. Dans tous les cas, le circuit de couplage et de chainage 112 est configuré pour ne jamais autoriser l'accès au processeur 104 à une donnée stockée dans l'un parmi les circuits périphériques 118, 120 et 122. A titre d'exemple, uniquement des données chiffrées par le circuit périphérique 116 sont accessibles par le processeur 104.

Bien que les figures 3, 4A, 4B,5A et 5B décrivent principalement des opérations dans lesquelles, suite à une demande de lecture ou d'écriture venant du processeur et vers un premier circuit, le circuit de couplage 112 est configuré pour commander une opération de lecture dans le premier circuit ou dans un autre circuit et commander l'écriture dans le premier circuit ou dans l'autre circuit, dans d'autres modes de réalisations, le circuit de couplage commande uniquement des opération de lecture, ou d'écriture, vers l'un et/ou l'autre du premier et de l'autre circuit. Le type des opérations commandé par le circuit de couplage 112 est déterminé par la valeur du paramètre d'état et, par exemple, par le type d'accès demandé par le processeur 104.

A titre d'exemple, le circuit de couplage et de chainage 112 est configuré pour, suite à la réception d'une demande d'accès pour écriture ou lecture, en provenance du processeur et vers une adresse de destination dans circuit périphérique, tels que l'un des circuits 116, 118, 120 ou 122, générer :
- soit une opération d'écriture d'une valeur de donnée, générée par un autre circuit périphérique, tels que l'un des circuits 116, 118, 120 ou 122, à l'adresse de destination dans le premier circuit périphérique ; ou
- soit la lecture dans le premier circuit périphérique d'une valeur de donnée stockée à l'adresse de destination et l'écriture de la valeur de donnée dans le deuxième circuit périphérique. En particulier, le type de l'opération est sélectionné en fonction de la valeur du paramètre d'état et de l'adresse de destination, et une adresse de lecture ou d'écriture de l'opération est par exemple sélectionnée sur la base de la valeur de donnée d'écriture.

A titre d'exemple, lorsque la valeur d'état est égale à 0xA, et lorsque le processeur 104 commande l'écriture d'une valeur, par exemple la valeur 0x20000000, vers une adresse, par exemple vers l'adresse 0x10000000, dans un premier circuit périphérique parmi les circuits 116, 118, 120 ou 122, le circuit de couplage et de chainage 112 est alors configuré pour :
- lire la valeur de la donnée stockée à l'adresse 0x20000000 dans un deuxième circuit parmi les circuits 116, 118, 120 ou 122 ; et
- écrire la valeur de cette donnée à l'adresse 0x10000000 dans le premier circuit. Dans cet exemple, les données sont déplacées de l'adresse 0x20000000 du deuxième circuit vers l'adresse 0x10000000 du premier circuit. De cette manière, les valeurs des données stockées à ces adresses ne sont pas connues par le processeur 104.

A titre d'exemple, lorsque la valeur d'état est égale à 0xB, et lorsque le processeur 104 commande l'écriture d'une valeur, par exemple la valeur 0x20000000, vers une adresse, par exemple vers l'adresse 0x10000000, dans un premier circuit périphérique parmi les circuits 116, 118, 120 ou 122, le circuit de couplage et de chainage 112 est alors configuré pour :
- lire la valeur de la donnée stockée à l'adresse 0x10000000 dans le premier circuit ; et
- écrire la valeur de cette donnée à l'adresse 0x20000000 dans un deuxième circuit périphériques parmi les circuits 116, 118, 120 ou 122. Dans cet exemple, les données sont déplacées de l'adresse 0x10000000 du premier circuit vers l'adresse 0x20000000 du deuxième circuit. De cette manière, les valeurs des données stockées à ces adresses ne sont pas connues par le processeur 104.

Dans ces exemples, la direction de la donnée à écrire dépend de la valeur du paramètre d'état. Les exemples ci-dessus sont donnés à titre illustratif et ne sont pas limitatifs.

Dans d'autres exemples, l'adresse dans le deuxième circuit est une constante lorsque le processeur 104 adresse une mémoire de type premier entré premier sorti (de l'anglais « First In First Out » - FIFO). Dans ce cas, la commande pour écriture de données, par le processeur 104, n'est pas pertinente pour définir l'adresse dans le deuxième circuit.

Dans d'autres cas, la commande pour écriture de données, par le processeur 104, est utilisée pour définir un nouveau type d'opération lorsque les données sont déplacées entre deux circuits parmi les circuits 116, 118, 120 ou 122. Dans un exemple, lorsque les données initiées par le processeur sont à égales à une première valeur, par exemple à 1, respectivement à égales à une deuxième valeur, par exemple à 2, la nouvelle opération est un type d'échange de données au niveau octet, respectivement au niveau bit.

A titre d'exemple, une partie de la valeur de la donnée commandée pour écriture par le processeur 104 est utilisée pour définir une adresse dans le deuxième circuit et une autre partie de la valeur est utilisée pour définir le type d'échange de données.

De manière générale, de nombreuses opérations différentes peuvent être définies sur la base de la combinaison du paramètre d'état, de l'adresse et des données initiées par le processeur.

Selon un mode de réalisation, le circuit de couplage et de chainage 112 est configuré pour intercepter une transaction créée par un initiateur tel que le processeur 104 ou tel qu'un circuit d'accès direct à la mémoire (de l'anglais « Direct Access Memory » - DMA) afin de créer de nouvelles transactions entre deux circuits périphériques. La nature de la nouvelle transaction dépend, par exemple, de la valeur du paramètre d'état, de l'adresse et des données initiées.

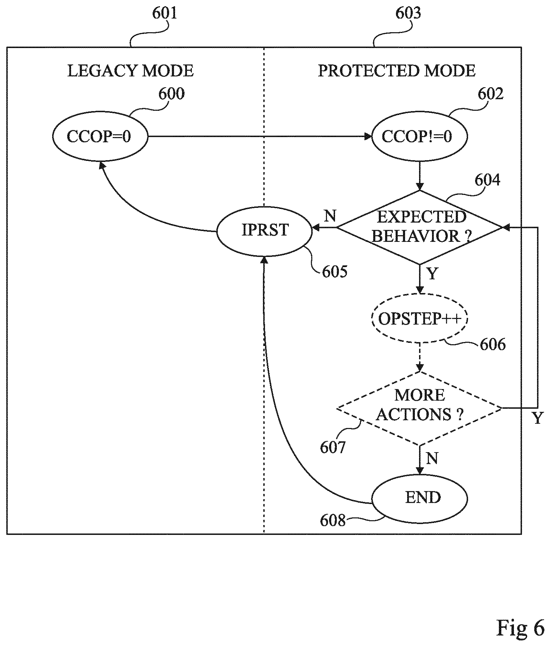

La figure 6 est un organigramme illustrant des étapes réalisées lors de différents modes de fonctionnement du circuit de couplage et de chainage 112.

Dans la suite de la description, le terme « événement suspect » fait référence à toute transaction inattendue sur le bus 114 et/ou un autre bus. A titre d'exemple, un évènement suspect a lieu lors d'une attaque physique sur le circuit 102. Un logiciel malveillant injecté dans le circuit 102 peut également être à l'origine d'un événement suspect. Un événement suspect a par exemple aussi lieu lors d'une attaque ou défaillance matérielle du circuit 102.

A titre d'exemple, le circuit de couplage et de chainage 112 comprend une machine d'état configurée pour détecter la présence d'un événement suspect vers et/ou dans le circuit de couplage et de chainage 112. A titre d'exemple, la machine d'état est configurée pour surveiller les transactions réalisées sur les bus 114, 200, 202, 204 et 206. A titre d'exemple, à chaque réception d'une demande d'accès pour écriture d'une valeur de donnée en provenance du processeur 104, la machine d'état est configurée pour comparer la valeur de la donnée avec, par exemple, une liste de valeurs autorisées. A titre d'exemple, lorsque la valeur de donnée ne correspond à aucune des valeurs de données comprises dans la liste, un évènement suspect est détecté. A titre d'exemple, la liste de valeurs autorisées comprend plusieurs sous-listes, chaque sous-liste indiquant des valeurs de données autorisées en association avec une valeur d'état donnée.

A titre d'exemple, dans une étape 600 (CCOP=0) la valeur de configuration est une valeur initiale. A titre d'exemple, à chaque démarrage du circuit 102, la valeur de vérification est automatiquement programmée vers la valeur initiale. Le circuit de couplage et de chainage 112 est alors placé dans un mode standard 601 (LEGACY MODE). A titre d'exemple, lorsqu'il est placé dans le mode standard, le circuit de couplage et de chainage 112 est configuré pour agir comme un routeur. En particulier, la machine d'état est par exemple désactivée. Par exemple, dans le mode standard, le circuit de couplage et de chainage 112 est configuré pour autoriser et router les transactions, demandées par le processeur 104, vers un ou plusieurs circuits périphériques. En particulier, lorsque le circuit de couplage et de chainage 112 agit comme un routeur, les opérations de chainage ou de couplage ne sont, par exemple, pas exécutables. A réception d'une demande d'accès vers un périphérique, le circuit de couplage et de chainage 112 génère alors une ou plusieurs transactions vers uniquement le circuit périphérique en question, et non pas vers plusieurs périphériques.

Dans d'autres exemples, le mode standard est utilisé à des fins de tests. Des cas d'utilisation du circuit 102 sont par exemple testés par l'intermédiaire de manipulations de données particulières et associées à des tests et de manipulations de valeurs non secrètes.

A titre d'exemple, la valeur de configuration est par exemple programmée vers une valeur de configuration, différente de la valeur initiale, dans une étape 602 (CCOP!=0). Le circuit de couplage et de chainage 112 est alors placé dans un mode protégé 603 (PROTECTED MODE). A titre d'exemple, dans le mode protégé, le circuit de couplage et de chainage 112 est configuré pour, selon la valeur du paramètre d'état contenue dans le registre 216 et/ou de la valeur d'une donnée transmise pour écriture par le processeur 104, réaliser une des opérations décrites en relation avec les figures 3, 4A, 4B, 5A et/ou 5B.

L'étape 602 comprend par exemple en outre des demandes d'accès pour écriture de clefs dans le circuit 122. Le circuit de couplage et de chainage 112 est alors configuré pour effectuer, pour chaque demande d'écriture d'une clef dans le circuit 122, l'opération décrite en relation avec la figure 3.

Bien que la suite d'opérations décrites dans l'étape 602 consiste en l'écriture de clefs, générées par le générateur de nombres 120, il est tout à fait envisageable que d'autres opérations, ayant par exemple un autre objectif que l'écriture de clefs, soient effectuées. La personne du métier saura adapter et configurer le circuit de chainage et de couplage 112 à effectuer les opérations voulues entre les circuits périphériques voulus lorsque le paramètre d'état est programmé à la première valeur d'état.

Dans une étape 604 (EXPECTED BEHAVIOR ?), la machine d'état vérifie qu'aucun événement suspect n'a lieu. A titre d'exemple, l'étape 604 est réalisée en parallèle de l'étape 602. Dans un autre exemple, l'étape 604 est réalisée suite à l'écriture de clefs dans le circuit 12. La machine d'état vérifie par exemple que l'écriture dans la mémoire volatile du circuit 122 s'est déroulée sans erreur. A titre d'exemple la machine d'état vérifie en outre que l'entièreté de la mémoire du circuit 122 est écrite.

Si un événement suspect est détecté (branche N en sortie du bloc 604), le procédé continue dans une étape 605 (IPRST). A titre d'exemple, l'étape 605 comprend la reprogrammation de la valeur de configuration vers la valeur initiale, replaçant le circuit de couplage et de chainage 112 dans l'état standard 601. A titre d'exemple, l'étape 605 comprend en outre la suppression du contenu de la mémoire volatile du circuit 122. A titre d'exemple, l'étape 605 comprend en outre la suppression du contenu de mémoires internes aux circuits périphériques 116, 118, 120 et 122. A titre d'exemple, l'étape 605 comprend en outre l'effacement de valeurs secrètes, telles que par exemple des clefs de chiffrement, stockées dans différents registres des circuits périphériques 122, 116 et 118.

Si, lors de la réalisation de l'étape 604, aucun événement suspect n'est détecté par la machine à états (branche Y), le procédé continue par exemple dans une étape 606 (OPSTEP ++). A titre d'exemple, lors de la réalisation de l'étape 606, le paramètre d'état est programmé, ou incrémenté, vers une nouvelle valeur.

L'étape 606 comprend en outre, en réponse à une demande d'accès pour écriture, ou lecture, en provenance du processeur 104, l'exécution d'une opération parmi les opérations par exemple décrites en relation avec les figures 4A, 4B, 5A et/ou 5B. La nature de l'opération et les circuits périphériques concernés sont en fonction de la valeur du paramètre d'état et de la valeur de configuration, et par exemple de la valeur de la donnée transmise pour écriture.

Suite à l'étape 606, une étape 607 (MORE ACTIONS ?) est réalisée, par exemple par la machine d'états. A titre d'exemple, lors de l'étape 607, la machine d'états détermine si d'autres actions, par exemple en fonction de la valeur de configuration, sont à effectuer. Si c'est le cas (branche Y), le procédé reprend dans une nouvelle réalisation de l'étape 604.

A titre d'exemple, la valeur de configuration de la machine d'états détermine le type d'opération. Par exemple, l'opération décrite en relation avec la figure 5A est réalisée avant l'opération décrite en relation avec la figure 5B. Par exemple, les opérations réalisées sont, dans l'ordre, l'opération décrite en relation avec la figure 5A, l'exécution d'opérations cryptographiques telle qu'une opération de hachage par le circuit 118 et l'opération décrite en relation avec la figure 5B.

A titre d'exemple, si aucune autre action n'est à effectuer, (branche N en sortie du bloc 607) le procédé se termine dans une étape 608 (END).

L'étape 608 a par exemple lieu lorsque le processeur 104 ne commande plus aucune demande d'accès vers l'un ou plusieurs des circuits périphériques 116, 118, 120 et/ou 122. L'étape 608 est alors une étape finale dans laquelle le processeur 104 a accès pour lecture des résultats stockés dans la mémoire volatile du circuit 122.

Suite à l'étape 608, le procédé se termine dans une réalisation de l'étape 605, dans laquelle la valeur du paramètre d'état est réinitialisée et les contenus des mémoires internes des circuits 116 à 122 sont effacés. Le circuit de couplage et de chainage est alors à nouveau placé dans le mode standard.

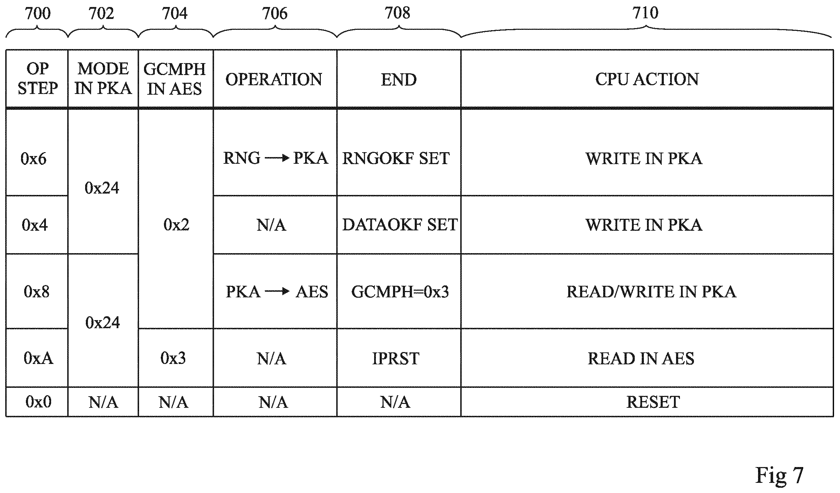

La figure 7 est un tableau présentant des exemples de différentes opérations effectuées par le circuit de couplage et de chainage 112 en fonction de la valeur du paramètre d'état.

Une colonne 700 (OPSTEP) indique par exemple les valeurs pouvant être prises par le paramètre d'état pour une valeur de configuration de la machine d'état. Par exemple, une suite de valeurs du paramètre d'état 0x6, 0x4, 0x8 et 0xA, représente une succession d'états de la machine d'états pour une valeur de configuration donnée. L'étape 606 permet alors le passage d'un état vers l'état suivant. Le paramètre d'état, est par exemple accessible par le processeur 104 en lecture mais n'est pas accessible en écriture par le processeur 104. De même, une fois dans le mode protégé, le circuit 102, en particulier le circuit de couplage et de chainage 112, est configuré pour ne pas autoriser le processeur 104 à modifier la valeur de configuration et la valeur d'état. L'évolution de ces valeurs est par exemple interne au circuit de couplage et de chainage 112. Les suites d'états possibles dépendent, par exemple, de la valeur de configuration courante. La valeur 0x0 indique par exemple que la valeur de configuration est programmée à la valeur initiale et par conséquent que le circuit 112 est dans le mode standard.

A titre d'exemple, lorsque la valeur est inférieure à 0x10, un objet binaire est en cours de génération. A titre d'exemple, l'objet binaire comprend un chiffrement, par exemple par le circuit 116 et selon un mode Galois/Counter (GCM - « Galois Counter Mode ») de la valeur fournie par le circuit générateur de nombre 120. L'objet binaire permet par exemple la fourniture d'une valeur de référence permettant par exemple de vérifier l'intégrité des données manipulées lors des transactions entre le processeur 104 et les circuits 122, 120, 118 et 116. La valeur de référence est par exemple calculée en fonction de la suite d'opérations réalisées.

Une colonne 702 (MODE IN PKA) indique un mode de fonctionnement du circuit 122 en fonction de la valeur du paramètre d'état. Dans l'exemple illustré par la figure 7, le mode de fonctionnement du circuit 122 est défini par une valeur pouvant être égale à 0x24 ou à N/A. A titre d'exemple, dans le mode standard, le circuit 122 est automatiquement placé dans un mode de fonctionnement associé à la valeur N/A, indiquant par exemple que le circuit 122 fonctionne normalement ou est inopérationnel. A titre d'exemple, la valeur 0x24 indique que l'accès au circuit 122 est commandé par le circuit de couplage et de chainage 112 et en fonction de la valeur de configuration. A titre d'exemple, la valeur du paramètre de configuration impose le mode de fonctionnement du circuit 122.

Une colonne 704 (GCMPH IN AES) indique un mode de fonctionnement du circuit 116. A titre d'exemple, lorsque la valeur de la colonne 704 est égale à 0x2, le circuit 116 est configuré pour chiffrer, selon un mode Galois/Counter, des données de charge utile. A titre d'exemple, lorsque la valeur de la colonne 704 est égale à 0x3, l'objet binaire est complétement généré et la valeur de référence peut être récupéré, par exemple par le circuit de couplage et de chainage 112. La valeur N/A indique que le circuit 116 fonctionne de la manière attendue dans le mode standard.

Une colonne 706 (OPERATION) indique le type d'opérations, par exemple parmi les opérations décrites en relation avec les figures 3, 4A, 4B, 5A et/ou 5B, qui est réalisable, en fonction de la valeur du paramètre d'état. A titre d'exemple, dans le mode standard, le circuit de couplage et de chainage 112 agit comme un routeur. Ainsi, les opérations décrites en relation avec les figures 3, 4A, 4B, 5A et 5C ne sont pas exécutables (N/A). A titre d'exemple, lorsque la valeur du paramètre d'état est 0x6, l'opération possible est celle décrite en relation avec la figure 3 (RNG- >PKA). A titre d'exemple, lorsque la valeur du paramètre d'état est égale à 0x8, l'opération possible est celle décrite en relation avec la figure 4A (PKA ->AES). A titre d'exemple, lorsque le paramètre d'état est égal à 0xA ou 0x4, aucune opération de chainage et de couplage n'est possible. Le processeur 104 a alors par exemple, lorsque la valeur du paramètre d'état est égale à 0x4, l'autorisation d'écriture dans le circuit 122, mais aucune opération, ni de couplage, ni de chainage, ne sera effectuée par le circuit de couplage et de chainage 112 en réponse à cette écriture.

Une colonne 708 (END) indique par exemple un paramétrage du circuit de couplage et de chainage 112 indiquant la fin d'une opération. A titre d'exemple, chaque fois qu'une valeur indiquant la fin d'une opération est stockée, le paramètre d'état est reprogrammé, ou incrémenté, vers une nouvelle valeur du paramètre d'état. La reprogrammation, ou l'incrémentation de la valeur du paramètre d'état, est par exemple exécutée par la machine d'états. En particulier, la machine d'états est configurée pour reprogrammer ou incrémenter la valeur du paramètre d'état lorsqu'une condition finale est vérifiée. A titre d'exemple, la condition finale correspond à l'écriture de la valeur 0x3, par exemple dans le circuit 116 et selon l'exemple décrit en relation avec la colonne 704. L'écriture de cette valeur est par exemple déclenchée par le processeur 104 ou par un autre circuit matériel du circuit 102. En particulier, le processeur 104 n'a pas l'autorisation de modifier la valeur d'état. Cependant, lorsque la valeur du paramètre d'état est égale à la valeur 0xA, le processeur 104 programme par exemple une valeur indiquant la fin d'une opération. A titre d'exemple, la programmation de cette valeur, par le processeur 104, entraine le retour du circuit de couplage et de chainage 112 dans le mode standard.

Une colonne 710 (CPU ACTION) indique par exemple les actions pouvant être réalisées par le processeur 104 en fonction de la valeur du paramètre d'état.

A titre d'exemple, lorsque le paramètre d'état a pour valeur 0x6, le processeur 104 peut transmettre des demandes d'écritures dans le circuit 122 (WRITE IN PKA). La colonne 706 indique alors que l'opération décrite en relation avec la figure 3 est effectuée. Dans cet exemple, des clefs générées par le circuit générateur de nombre 120 sont écrites dans la mémoire volatile du circuit 122.

A titre d'exemple, une valeur RNGOKF SET est stockée lorsque qu'un nombre fixé en amont de clefs a été écrit dans la mémoire du circuit 122. Dans un autre exemple la valeur RNGOKF SET est stockée lorsque la mémoire du circuit 122 est pleine. A titre d'exemple, le stockage de la valeur RNGOKF SET engendre la programmation, ou l'incrémentation, du paramètre d'état vers la valeur 0x8.

A titre d'exemple, lorsque la valeur du paramètre d'état est égale à 0x4, la machine d'état est par exemple configurée pour vérifier le contenu de la mémoire volatile du circuit 122. A titre d'exemple, la machine d'état vérifie que l'intégralité des données transmises par le processeur 104, a été écrite dans la mémoire volatile du circuit 122. A titre d'exemple, une fois la vérification de la mémoire réalisée avec succès, une valeur de donnée DATAOKF SET est stockée dans le circuit de couplage et de chainage 112.

A titre d'exemple, lorsque l'état de la machine d'état est la valeur 0x4, le processeur 104 écrit une clef privée dans le circuit 122. A titre d'exemple, la séquence d'écriture pour l'opération d'écriture dépend de la valeur du paramètre d'état stocké dans le registre 216.

A titre d'exemple, le stockage de la valeur DATAOKF SET engendre la reprogrammation, où l'incrémentation, de la valeur du paramètre d'état vers la valeur 0x8.

Lorsque la valeur du paramètre d'état est égale à 0x8 le processeur 104 peut par exemple transmettre des demandes d'écriture et/ou lecture vers le circuit 122 (READ/WRITE IN PKA). La colonne 706 indique que l'opération réalisée par le circuit de couplage et de chainage 112 est alors, par exemple, l'opération décrite en relation avec la figure 4A. A titre d'exemple, une fois les demandes transmises par le processeur 104 traitées, une valeur GCMPH=0x3 est stockée. A titre d'exemple, le processeur 104 est configuré pour indiquer au circuit de couplage et de chainage 112 que la séquence de demande d'accès pour lecture dans le circuit 122 est terminée. A titre d'exemple, cette indication prend la forme d'une demande d'accès pour écriture d'une valeur de donnée, la valeur de donnée étant par exemple connue par la machine d'état et indiquant que la séquence de lecture et/ou écriture est terminée.

Le stockage de la valeur GCMPH=0x3 engendre la reprogrammation, ou l'incrémentation, de la valeur du paramètre d'état vers la valeur 0xA. Le mode de fonctionnement du circuit 116 est alors aussi modifié.

Lorsque la valeur du paramètre d'état est égale à 0xA, le circuit de couplage et de chainage 112 est configuré pour recevoir des demandes d'accès pour lecture de données dans le circuit 116 (READ IN AES) en provenance du processeur 104. Le processeur 104 lit, dans le circuit périphérique 116, en outre la valeur de référence générée par l'intermédiaire de l'objet binaire. Le circuit de couplage et de chainage 112 est alors configuré pour n'effectuer aucune opération (N/A). Une fois la lecture dans le circuit 116 terminée, une valeur IPRST est par exemple stockée dans le circuit de couplage et de chainage 112. Le stockage de la valeur IPRST engendre par exemple la reprogrammation du paramètre d'état vers la valeur initiale. A titre d'exemple, les circuits périphériques 116, 118 et 122 sont réinitialisés (RESET). En particulier, le contenu, comme par exemple des clefs de chiffrement, de l'un ou plusieurs parmi les circuits 122, 116 et 118 est supprimé. Bien que l'exemple de la figure 7 est basé sur des valeurs spécifiques, ces valeurs sont uniquement données à titre d'exemple, et pourraient être changées en d'autres valeurs dans d'autres modes de réalisation.

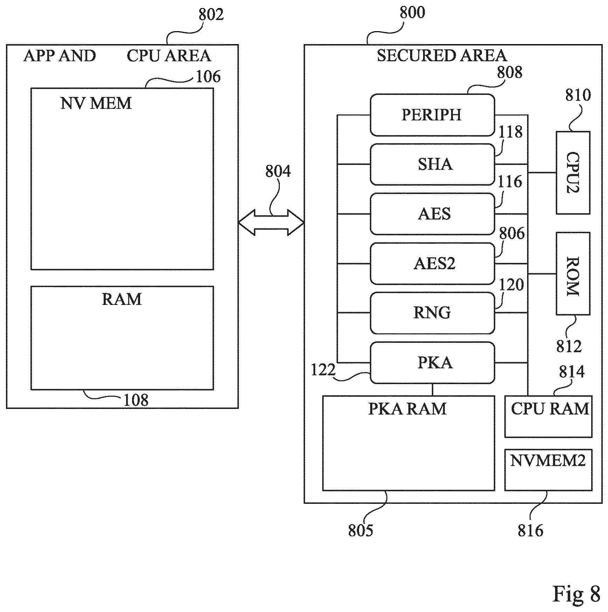

La figure 8 est un schéma par blocs illustrant un autre mode de réalisation du dispositif électronique 100.

A titre d'exemple le circuit 102 comprend une zone sécurisée 800 (SECURED AREA) reliée à une zone non sécurisée 802 (APP. AND CPU AREA) par l'intermédiaire d'un bus 804.

A titre d'exemple, la zone sécurisée 800 comprend les circuits 116, 118, 120 et 122 ainsi que le circuit de couplage et de chainage 112. A titre d'exemple le circuit 122 est relié à une mémoire volatile 805 (PKA RAM) configurée pour stocker des données transmises par le circuit de couplage et de chainage 112.

La zone sécurisé 800 comprend par exemple en outre un autre circuit cryptographique 806 (AES2), par exemple configuré pour chiffrer et/ou déchiffrer des données selon un algorithme cryptographique, tel que, par exemple, un algorithme de type AES.

A titre d'exemple, la zone sécurisée 800 comprend en outre d'autres circuits périphériques 808, tel que par exemple un circuit de contrôle de redondance cyclique.

A titre d'exemple, la zone sécurisée 800 comprend en outre un processeur dédié 810 (CPU2) relié au circuit de couplage et de chainage 112 par l'intermédiaire d'un bus. La zone 800 comprend par exemple en outre une mémoire non volatile non modifiable 812 (ROM, de l'anglais « Read Only Memory ») ainsi qu'une mémoire volatile 814 (CPU RAM) et une mémoire non volatile 816 (NV MEM2). Le processeur dédié 802 est configuré pour effectuer les opérations de couplage et/ou de chainage par l'intermédiaire du circuit de couplage et de chainage 112. Selon ce mode de réalisation, uniquement le processeur 810 est configuré pour effectuer des opérations sécurisées, et par conséquent, pour manipuler les objets binaires générés.

A titre d'exemple, la zone non sécurisée 802 comprend le processeur 104, ainsi que les mémoires non volatile et volatile 106 et 108.

Un avantage des modes de réalisations décrits est que le processeur 104 ne peut pas lire les données en clair et ne peut pas faire de transaction avec le circuit de couplage et de chainage 112.

Un autre avantage des modes de réalisation décrits est que le processeur dédié 810, bien que pouvant utiliser le circuit de couplage et de chainage 112, ne peut, lui non plus, lire des données en clair. L'utilisation du processeur 810 apporte un niveau d'isolation supplémentaire aux données sensibles et aux secrets.

Un autre avantage des modes de réalisation décrits, comprenant la combinaison, au niveau système, des circuits périphériques avec un circuit de chainage ou de couplage, est qu'ils permettent d'améliorer les performances en termes de temps de traitement et/ou de fournir de nouvelles fonctionnalités sans modifier les périphériques existants. Les circuits périphériques, tels que par exemple un circuit cryptographique et un circuit de contrôle de redondance cyclique, ou tout autre circuit périphérique, ont la possibilité d'être utilisés séparément ou de manière combinée en fonction du mode d'utilisation du circuit de couplage et de chainage.

Un autre avantage des modes de réalisation décrits est qu'ils permettent d'effectuer le traitement d'une valeur de donnée par deux circuits périphériques en parallèle. L'utilisation du circuit de couplage et chainage permet de réduire la surface du circuit. Une opération de chainage ne requiert qu'une seule demande de transfert de donnée de la part du processeur 104. Ainsi, les modes de réalisation décrits permettent d'améliorer les performances, en terme de temps de traitement, du dispositif et réduit sa consommation en énergie.

Un autre avantage des modes de réalisation décrits est que, par rapport à la seule utilisation du processeur sans circuit de couplage et de chainage, moins d'opérations sont nécessaires pour effectuer une opération de chainage ou de couplage entre deux périphériques. En effet, une seule demande d'accès en provenance du processeur permet la génération, par le circuit de couplage et de chainage d'autres opérations.

Un avantage des modes de réalisations décrits en relation avec les figures 3, 4A, 4B, 5A et 5B est que ni le processeur 104, ni le processeur 810, ne manipule jamais de données en clair. Le processeur 104 ne peut utiliser directement les périphériques uniquement lorsque le circuit de couplage et de chainage est en mode standard.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le type d'opération effectuée en fonction de la valeur du paramètre d'état peut varier. Bien que les exemples illustrés décrivent le traitement de clefs de chiffrements, d'autres types de traitements de donnée peuvent être implémentés. Les valeurs pouvant être prises par paramètre d'état peuvent bien sûr différer des valeurs décrites, en particulier avec les valeurs décrites en relation avec la figure 7. De même, le type d'opérations effectuées par le circuit de couplage et de chainage et les circuits périphériques impliquées peuvent différer des opérations par exemple décrites dans les figures 3, 4A, 4B, 5A et/ou 5B.

Enfin, la mise en œuvre pratique des modes de réalisation et variantes décrits est à la portée de la personne du métier à partir des indications fonctionnelles données ci-dessus. En particulier, bien que les circuits périphériques décrits soient majoritairement des circuits cryptographique, d'autres types de circuits peuvent être reliés au circuit de couplage et de chainage.

## Revendications

1. Circuit d'interface (112) relié à au moins un premier et un deuxième circuits périphériques (116, 118, 120, 122), et comprenant un registre (216) stockant un paramètre d'état, le circuit d'interface étant configuré pour :
- recevoir une demande d'accès pour écriture ou lecture, en provenance d'un processeur (104) et vers une adresse de destination dans le premier circuit périphérique ; et
- générer une opération comprenant l'écriture d'une valeur de donnée, générée par le deuxième circuit périphérique, à l'adresse de destination dans le premier circuit périphérique et/ou la lecture dans le premier circuit périphérique d'une valeur de donnée stockée à l'adresse de destination et l'écriture de la valeur de donnée dans le deuxième circuit périphérique,
le type de l'opération étant sélectionné en fonction de la valeur du paramètre d'état écrit dans le registre et de l'adresse de destination.

2. Circuit d'interface selon la revendication 1, dans lequel l'opération générée comprend :
- l'écriture de la valeur de donnée générée par le deuxième circuit périphérique (116, 118, 120, 122), à l'adresse de destination dans le premier circuit périphérique (116, 118, 120, 122) lorsque la demande d'accès est une demande d'accès pour écriture d'une première valeur de donnée différente de la valeur de donnée, dans le premier circuit et lorsque le paramètre d'état est programmé à une première valeur d'état ; et
- la lecture dans le premier circuit périphérique d'une valeur de donnée stockée à l'adresse de destination et l'écriture de la valeur de donnée dans le deuxième circuit périphérique lorsque le paramètre d'état est programmé à une deuxième valeur d'état, différente de la première valeur d'état.

3. Circuit d'interface (112) selon la revendication 1 ou 2, dans lequel, lorsque la demande d'accès est une demande d'accès pour écriture d'une donnée, le circuit d'interface est en outre configuré pour sélectionner l'opération et/ou sa destination en fonction en outre de la valeur de la donnée.

4. Circuit d'interface (112) selon la revendication 3, configuré pour, lorsque le processeur (104) initie une demande d'accès pour écriture d'une première valeur de donnée vers une première adresse dans un premier circuit périphérique (116, 118, 120, 122) :
- lorsque la valeur d'état est égale à une première valeur, lire la valeur d'une deuxième donnée stockée à une deuxième adresse, égale à la valeur de la première donnée, dans un deuxième circuit périphérique, et écrire la valeur de la deuxième donnée à la première adresse dans le premier circuit ; et
- lorsque la valeur d'état est égale à une deuxième valeur différente de la première valeur, lire la valeur d'une troisième donnée stockée à la première adresse dans le premier circuit périphérique, et écrire la valeur de la troisième donnée à une troisième adresse, égale à la première valeur de donnée, dans le deuxième circuit.

5. Circuit d'interface (112) selon l'une quelconque des revendications 1 à 4, configuré en outre pour, lorsque le paramètre d'état est programmé à une valeur d'initialisation, autoriser l'accès, par le processeur (104), vers chacun des au moins deux circuits périphériques (116, 118, 120, 122).

6. Circuit d'interface (112) selon la revendication 5, dans lequel, lorsque la demande d'accès est une demande d'accès pour écriture d'une valeur de donnée interdite, l'opération générée comprend la programmation de la valeur du paramètre d'état à la valeur d'initialisation et la suppression du contenu d'au moins un des circuits périphériques (116, 118, 120, 122).

7. Circuit d'interface (112) selon l'une quelconque des revendications 1 à 6, dans lequel l'opération générée comprend en outre la lecture et/ou l'écriture dans un troisième circuit périphérique (116, 118, 120, 122) relié au circuit d'interface.

8. Circuit d'interface (112) selon l'une quelconque des revendications 1 à 7, configuré en outre pour, suite à la demande d'accès pour lecture ou écriture en provenance du processeur (104), retourner une valeur par défaut au processeur.

9. Dispositif électronique (100) comprenant :
- le circuit d'interface (112) selon l'une quelconque des revendications 1 à 8 ; et
- les au moins deux circuits périphériques (116, 118, 120, 122) reliés au circuit d'interface ; et
- le processeur (104) relié au circuit d'interface et configuré pour transmettre une demande d'accès pour lecture ou écriture vers une adresse de destination dans l'un parmi les au moins deux circuits périphériques.

10. Dispositif selon la revendication 9, dans lequel les au moins deux circuits périphériques comprennent un premier circuit cryptographique (122) et un générateur de nombres (120), et dans lequel le circuit d'interface (112) est configuré pour, lorsque le paramètre d'état est programmé à une première valeur d'état, intercepter une demande d'accès pour écriture d'une clef de chiffrement en provenance du processeur (104) et vers une adresse de destination dans le premier circuit cryptographique et commander l'écriture d'une autre valeur, générée par le générateur de nombres, à l'adresse de destination dans le premier circuit cryptographique.

11. Dispositif (100) selon la revendication 9 ou 10, dans lequel les au moins deux circuits comprennent en outre un deuxième circuit cryptographique (116, 118), et dans lequel le circuit d'interface (112) est configuré pour, lorsque le paramètre d'état est programmé à une deuxième valeur d'état différente de la première valeur d'état, intercepter une demande d'accès pour écriture et/ou de lecture en provenance du processeur (104) et vers une adresse de destination dans le premier circuit cryptographique et commander l'écriture d'une valeur de donnée, préalablement stockée à l'adresse de destination dans le premier circuit cryptographique, dans le deuxième circuit cryptographique.

12. Dispositif (100) selon l'une quelconque des revendications 9 à 11, comprenant en outre un circuit de réinitialisation d'horloge (210) configuré pour activer et/ou désactiver les au moins deux circuits périphériques (116, 118, 120, 122) et dans lequel le circuit d'interface (112) est configuré pour commander le circuit de réinitialisation d'horloge.

13. Procédé comprenant :
- la réception, par un circuit d'interface (112), d'une demande d'accès pour écriture ou lecture, en provenance d'un processeur (104) et vers une adresse de destination dans un premier circuit périphérique (116, 118, 120, 122) relié au circuit d'interface ;
- la génération, par le circuit d'interface, d'une opération comprenant l'écriture d'une valeur de donnée, générée par le deuxième circuit périphérique, à l'adresse de destination dans le premier circuit périphérique et/ou comprenant la lecture dans le premier circuit périphérique d'une valeur de donnée stockée à l'adresse de destination et l'écriture de la valeur de donnée dans le deuxième circuit périphérique, le type de l'opération et sa destination étant sélectionnées en fonction de la valeur du paramètre d'état écrit dans un registre (216) du circuit d'interface, et de l'adresse de destination.

14. Procédé selon la revendication 13, dans lequel, lorsque la demande d'accès est une demande d'accès pour écriture d'une donnée, l'opération générée et/ou sa destination sont sélectionnées en fonction en outre de la valeur de la donnée.

15. Procédé selon la revendication 13 ou 14, comprenant en outre la fourniture, par le circuit d'interface (112) et vers le processeur (104), d'une valeur par défaut en réponse à la demande d'accès pour lecture ou écriture.

## Patentansprüche

1. Eine Schnittstellenschaltung (112), die mit wenigstens einer ersten und einer zweiten Peripherieschaltung (116, 118, 120, 122) gekoppelt ist und ein Register (216) aufweist, das einen Zustandsparameter speichert, wobei die Schnittstellenschaltung konfiguriert ist zum:
- Empfangen einer Schreib- oder Lesezugriffsanforderung, die von einem Prozessor (104) stammt und an eine Zieladresse in der ersten Peripherieschaltung gerichtet ist; und
- Erzeugen einer Operation, die das Schreiben eines Datenwerts aufweist, der von der zweiten Peripherieschaltung erzeugt wird, an die Zieladresse in der ersten Peripherieschaltung und/oder das Lesen, in der ersten Peripherieschaltung, eines Datenwerts, der an der Zieladresse gespeichert ist, und das Schreiben des Datenwerts an die zweite Peripherieschaltung, wobei die Art der Operation als eine Funktion des Werts des Zustandsparameters, der in das Register geschrieben wird, und der Zieladresse ausgewählt wird.

2. Die Schnittstellenschaltung (112) nach Anspruch 1, wobei die erzeugte Operation Folgendes aufweist:
- das Schreiben des Datenwerts, der von der zweiten Peripherieschaltung (116, 118, 120, 122) erzeugt wird, an die Zieladresse in der ersten Peripherieschaltung (116, 118, 120, 122), wenn die Zugriffsanforderung eine Zugriffsanforderung zum Schreiben eines ersten Datenwerts ist, der sich von dem Datenwert in der ersten Peripherieschaltung unterscheidet, und wenn der Zustandsparameter auf einen ersten Zustandswert programmiert ist; und
- das Lesen, in der ersten Peripherieschaltung, eines Datenwerts, der an der Zieladresse gespeichert ist, und das Schreiben des Datenwerts, in der zweiten Peripherieschaltung gespeichert ist, wenn der Zustandsparameter auf einen zweiten Zustandswert programmiert ist, der sich vom ersten Zustandswert unterscheidet.

3. Die Schnittstellenschaltung (112) nach Anspruch 1 oder 2, wobei, wenn die Zugriffsanforderung eine Zugriffsanforderung zum Schreiben von Daten ist, die Schnittstellenschaltung ferner konfiguriert ist zum Auswählen der Operation und/oder ihres Ziels entsprechend dem Datenwert.

4. Die Schnittstellenschaltung nach Anspruch 3, die ferner konfiguriert ist, wenn der Prozessor (104) eine Zugriffsanforderung zum Schreiben eines ersten Datenwerts an eine erste Adresse in der ersten Peripherieschaltung (116, 118, 120, 122) initiiert, zum:
- wenn der Zustandswert gleich einem ersten Wert ist, Lesen des Wertes eines zweiten Datenwertes, der an einer zweiten Adresse gespeichert ist, der gleich dem Wert des ersten Datenwertes in der ersten Schaltung ist; und
- wenn der Zustandswert gleich einem zweiten Wert ist, Lesen des Wertes eines dritten Datenwertes, der an der ersten Adresse in der ersten Peripherieschaltung gespeichert ist, und Schreiben des Wertes des dritten Datenwertes an eine dritte Adresse, der gleich dem ersten Datenwert ist, in der zweiten Peripherieschaltung.

5. Die Schnittstellenschaltung (112) nach einem der Ansprüche 1 bis 4, die ferner so konfiguriert, wenn der Zustandsparameter auf einen Sollwert programmiert ist, zum Autorisieren des Zugriffs, durch den Prozessor (104), auf jede der wenigstens zwei Peripherieschaltungen (116, 118, 120, 122).

6. Die Schnittstellenschaltung (112) nach Anspruch 5, wobei, wenn die Zugriffsanforderung eine Zugriffsanforderung zum Schreiben eines verbotenen Datenwerts ist, die erzeugte Operation das Programmieren des Werts des Zustandsparameters auf den eingestellten Wert aufweist und das Entfernen des Inhalts von wenigstens einer der Peripherieschaltungen (116, 118, 120, 122).

7. Die Schnittstellenschaltung (112) nach einem der Ansprüche 1 bis 6, wobei die erzeugte Operation ferner das Lesen und/oder Schreiben in einer dritten Peripherieschaltung (116, 118, 120, 122) aufweist, die mit der Schnittstellenschaltung gekoppelt ist.

8. Die Schnittstellenschaltung (112) nach einem der Ansprüche 1 bis 7, die ferner konfiguriert ist, nach der Lese- oder Schreibzugriffsanforderung, die vom Prozessor (104) stammt, zum Zurückgeben eines Standardwerts an den Prozessor.

9. Eine elektronische Vorrichtung (100), die Folgendes aufweist:
- die Schnittstellenschaltung (112) gemäß einem der Ansprüche 1 bis 8; und
- die wenigstens zwei Peripherieschaltungen (116, 118, 120, 122), die mit der Schnittstellenschaltung gekoppelt sind; und
- den Prozessor (104), der mit der Schnittstellenschaltung gekoppelt und konfiguriert ist zum Übertragen einer Lese- oder Schreibzugriffsanforderung an eine Zieladresse in einer der wenigstens zwei Peripherieschaltungen.

10. Die Vorrichtung nach Anspruch 9, wobei die wenigstens zwei Peripherieschaltungen eine erste Kryptografieschaltung (122) und einen Zahlengenerator (120) aufweisen, und wobei die Schnittstellenschaltung (112) konfiguriert ist, wenn der Zustandsparameter auf einen ersten Zustandswert programmiert ist, zum Abfangen einer Zugriffsanforderung zum Schreiben eines Verschlüsselungsschlüssels, der vom Prozessor (104) stammt und an eine Zieladresse in der ersten Kryptografieschaltung gerichtet ist, und zum Steuern des Schreibens eines anderen Wertes, der vom Zahlengenerator erzeugt wird, an die Zieladresse in der ersten Kryptografieschaltung.

11. Die Vorrichtung (100) nach Anspruch 9 oder 10, wobei die wenigstens zwei Schaltungen ferner eine zweite Kryptografieschaltung (116, 118) aufweisen, und wobei die Schnittstellenschaltung (112) konfiguriert ist, wenn der Zustandsparameter auf einen zweiten Zustandswert programmiert ist, der sich vom ersten Zustandswert unterscheidet, zum Abfangen einer Schreib- und/oder Lesezugriffsanforderung, die vom Prozessor (104) stammt und an eine Zieladresse in der ersten Kryptografieschaltung gerichtet ist, und zum Steuern des Schreibens eines Datenwerts, der zuvor an der Zieladresse in der ersten Kryptografieschaltung gespeichert wurde, in die zweite Kryptografieschaltung.

12. Die Vorrichtung (100) nach einem der Ansprüche 9 bis 11, ferner aufweisend eine Taktrücksetzschaltung (210), die konfiguriert ist zum Aktivieren und/oder Deaktivieren der wenigstens zwei Peripherieschaltungen (116, 118, 120, 122), wobei die Schnittstellenschaltung (112) konfiguriert ist zum Steuern der Taktrücksetzschaltung.

13. Ein Verfahren, das Folgendes aufweist:
- den Empfang, durch eine Schnittstellenschaltung (112), einer Schreib- oder Lesezugriffsanforderung, die von einem Prozessor (104) stammt und an eine Zieladresse in einer ersten Peripherieschaltung (116, 118, 120, 122) gerichtet ist, die mit der Schnittstellenschaltung gekoppelt ist,
- das Erzeugen, durch die Schnittstellenschaltung, einer Operation, die das Schreiben eines Datenwerts, der von der zweiten Peripherieschaltung erzeugt wird, an die Zieladresse in der ersten Peripherieschaltung aufweist und/oder das Lesen, in der ersten Peripherieschaltung, eines Datenwerts, der an der Zieladresse gespeichert ist, und das Schreiben des Datenwerts an die zweite Peripherieschaltung,
wobei die Art der Operation und ihr Ziel als Funktion des Wertes des Zustandsparameters, der in ein Register (216) der Schnittstellenschaltung geschrieben wird, und der Zieladresse ausgewählt werden.

14. Das Verfahren nach Anspruch 13, wobei, wenn die Zugriffsanforderung eine Zugriffsanforderung zum Schreiben von Daten ist, die erzeugte Operation und/oder ihr Ziel ferner entsprechend dem Datenwert ausgewählt werden.

15. Das Verfahren nach Anspruch 13 oder 14, ferner aufweisend das Liefern, durch die Schnittstellenschaltung (112) und an den Prozessor (104), eines Standardwerts als Antwort auf die Lese- oder Schreibzugriffsanforderung.

## Claims

1. An interface circuit (112) coupled to at least a first and a second peripheral circuits (116, 118, 120, 122), and comprising a register (216) storing a state parameter, the interface circuit being configured to:
- receive a write or read access request, originating from a processor (104) and towards a destination address in the first peripheral circuit; and
- generate an operation comprising the writing of a data value, generated by the second peripheral circuit, to the destination address in the first peripheral circuit and/or the reading in the first peripheral circuit of a data value stored at the destination address and the writing of the data value to the second peripheral circuit, the nature of the operation being selected as a function of the value of the state parameter written in the register and of the destination address.

2. The interface circuit (112) according to claim 1, wherein, the generated operation comprises:
- the writing of the data value generated by the second peripheral circuit (116, 118, 120, 122), at the destination address in the first peripheral circuit (116, 118, 120, 122), when the access request is an access request for writing a first data value, different from the data value, in the first peripheral circuit and when the state parameter is programmed to a first state value; and
- the reading in the first peripheral circuit of a data value stored at the destination address and the writing of the data value in the second peripheral circuit when the state parameter is programmed to a second state value, different from the first state value.

3. The interface circuit (112) according to claim 1 or 2, wherein, when the access request is an access request for the writing of data, the interface circuit is further configured to further select the operation and/or its destination according to the data value.

4. The interface circuit according to claim 3, further configured to, when the processor (104) initiates an access request for writing a first data value to a first address in the first peripheral circuit (116, 118, 120, 122):
- when the state value is equal to a first value, read the value of a second data value stored at a second address, equal to the value of the first data value in the first circuit; and
- when the sate value is equal to a second value different from the first value, read the value of a third data value stored at the first address in the first peripheral circuit, and write the value of the third data value at a third address, equal to the first data value, in the second peripheral circuit.

5. The interface circuit (112) according to any of claims 1 to 4, further configured to, when the state parameter is programmed to a set value, authorize the access, by the processor (104), to each of the at least two peripheral circuits (116, 118, 120, 122).

6. The interface circuit (112) according to claim 5, wherein, when the access request is an access request for the writing of a forbidden data value, the generated operation comprises the programming of the value of the state parameter to the set value and the removal of the content of at least one of the peripheral circuits (116, 118, 120, 122).

7. The interface circuit (112) according to any of claims 1 to 6, wherein the generated operation further comprises the reading and/or the writing in a third peripheral circuit (116, 118, 120, 122) coupled to the interface circuit.

8. The interface circuit (112) according to any of claims 1 to 7, further configured to, following the read or write access request originating from the processor (104), return a default value to the processor.

9. An electronic device (100) comprising:
- the interface circuit (112) according to any of claims 1 to 8; and
- the at least two peripheral circuits (116, 118, 120, 122) coupled to the interface circuit; and
- the processor (104) coupled to the interface circuit and configured to transmit a read or write access request towards a destination address in one among the at least two peripheral circuits.

10. The device according to claim 9, wherein the at least two peripheral circuits comprise a first cryptographic circuit (122) and a number generator (120), and wherein the interface circuit (112) is configured to, when the state parameter is programmed to a first state value, intercept an access request for the writing of an encryption key originating from the processor (104) and towards a destination address in the first cryptographic circuit and control the writing of another value, generated by the number generator, at the destination address in the first cryptographic circuit.

11. The device (100) according to claim 9 or 10, wherein the at least two circuits further comprise a second cryptographic circuit (116, 118), and wherein the interface circuit (112) is configured to, when the state parameter is programmed to a second state value different from the first state value, intercept a write and/or read access request originating from the processor (104) and towards a destination address in the first cryptographic circuit and control the writing of a data value, previously stored at the destination address in the first cryptographic circuit, into the second cryptographic circuit.

12. The device (100) according to any of claims 9 to 11, further comprising a clock reset circuit (210) configured to activate and/or deactivate the at least two peripheral circuits (116, 118, 120, 122) and wherein the interface circuit (112) is configured to control the clock reset circuit.

13. A method comprising:
- the reception, by an interface circuit (112), of a write or read access request, originating from a processor (104) and towards a destination address in a first peripheral circuit (116, 118, 120, 122) coupled to the interface circuit;
- the generation, by the interface circuit, of an operation comprising the writing of a data value, generated by the second peripheral circuit, to the destination address in the first peripheral circuit and/or the reading in the first peripheral circuit of a data value stored at the destination address and the writing of the data value to the second peripheral circuit, the nature of the operation and its destination being selected as a function of the value of the state parameter written in a register (216) of the interface circuit, and of the destination address.

14. The method according to claim 13, wherein, when the access request is an access request for the writing of data, the generated operation and/or its destination are further selected according to the data value.

15. The method according to claim 13 or 14, further comprising the supply, by the interface circuit (112) and towards the processor (104), of a default value as a response to the read or write access request.
